# EUROPEAN PATENT SPECIFICATION

(11) **EP 2 783 319 B1**
(45) Date of publication and mention of the grant of the patent: **13.03.2019**
(21) Application number: 12806220.5
(22) Date of filing: 21.11.2012
(51) Int. Cl.: G06F 21/31, G06Q 20/12, G06Q 20/40

(54) **PROVIDING VERIFICATION OF USER IDENTIFICATION INFORMATION**
VERIFIZIERUNG VON BENUTZERIDENTIFIZIERUNGSINFORMATION
MISE EN OEUVRE D'UNE VÉRIFICATION DES INFORMATIONS D'IDENTIFICATION D'UTILISATEUR

(30) Priority: 22.11.2011 CN 201110374143; 20.11.2012 US 201213682258
(43) Date of publication of application: 01.10.2014
(73) Proprietor: Alibaba Group Holding Limited, Grand Cayman (KY)
(72) Inventor: TONG, Hai, Hangzhou (CN); YANG, Yulin, Hangzhou (CN); ZHU, Jianwen, Hangzhou (CN); JIANG, Tao, Hangzhou (CN); JOONG, Chiwei, Hangzhou (CN); WANG, Qinyu, Hangzhou (CN)
(74) Representative: McKinnon, Alistair James
(86) International application number: PCT/US2012/066193
(87) International publication number: WO 2013/078268

(56) References cited:
- US-A1- 2010 114 776

## Description

### FIELD OF THE INVENTION

The present application relates to the field of user identification information verification. In particular, it relates to a method and system of verifying a user's identification information.

### BACKGROUND OF THE INVENTION

With the spread of network technology, more and more users have begun to make electronic payments. Online payment is a form of electronic payment. In some instances, an online payment is initiated by a user indicating to transfer funds from a bank or to charge a credit card. The online payment may be facilitated by a payment interface that performs verification of the user prior to permitting the user to proceed with the transaction to ensure that the payment is being carried by the user that is actually associated with a given account.

There are two common existing identification information verification techniques. One such technique makes use of permanent passwords to verify a user's identification information. For example, when a user registers a user account at a certain website, the user may set up a password to use for making online payments. When the user later logs in to the same website with the user's account information and decides to make an online payment, the website will prompt the user to submit the password. If the user submits the correct password, then the transaction will be permitted. Otherwise, if the user submits an incorrect password, then the transaction will be denied. One shortcoming in this technique is that it is relatively insecure because the user's password may be stolen or otherwise leaked, thereby leaving the user's bank account or credit card, for example, open to the risk of being compromised.

Another such technique makes use of physical payment equipment. For example, such payment equipment may need to be physically possessed by a user. For example, the physical payment equipment may comprise an electronic key fob or a security token. During an online payment, the payment equipment generates a new payment code. The user can then read the code and send the payment code over the Internet to the server that is associated with the verification service. Because each payment code that is generated according to this technique is different and is dynamically variable, the user will likely not be harmed even if a code is leaked (because due to the dynamic generation of such codes, a party that may desire to steal from the user may not have the most updated payment code needed to perform verification). However, this technique raises the cost of identification information verification because it requires users to purchase payment equipment. In addition, payment equipment needs to be carried around, which may be inconvenient. Furthermore, if the user loses the payment equipment, then the user cannot make online payments, which is also inconvenient. It would be desirable to increase the security of user identification information verification in a manner that is not too costly.

Document US2010/0114776 A1 depicts a system enabling cardholders conducting an online transaction to be authenticated in real-time using a challenge-response application. The challenge-response application can be administered by an issuer or by a third party on-behalf-of an issuer. A challenge question can be presented to the cardholder, and the cardholder's response can be verified. The challenge question presented can be selected based on an analysis of the risk of the transaction and potentially other factors. A variety of dynamic challenge questions can be used without the need for the cardholder to enroll into the program. Additionally, there are many flexible implementation options of the challenge-response application that can be adjusted based on factors such as the location of the merchant or the location of the consumer.

The present invention is defined by the claims.

### BRIEF DESCRIPTION OF THE DRAWINGS

Various embodiments of the invention are disclosed in the following detailed description and the accompanying drawings.
FIG. 1 is a diagram showing an embodiment of a system for providing verification of a user's identification information.
FIG. 2 is a diagram showing an embodiment of a process for providing verification of a user's identification information.
FIG. 3A shows an example of a verification question for user A that is presented with answer choices and corresponding radio buttons.
FIG. 3B shows an example of a verification question for user A that is presented with answer choices and corresponding checkboxes.
FIG. 4 is a flow diagram showing an embodiment of a process for providing verification of a user's identification information.
FIG. 5 is a flow diagram showing an embodiment of a process for generating a plurality of answer choices for a verification question.
FIG. 6 is a flow diagram showing an embodiment of a process for selecting user attribute values previously submitted by other users that pertain to the user attribute included in the verification question.
FIG. 7 is a diagram showing an embodiment of a system for performing user identification information verification.
FIG. 8 is a diagram showing another embodiment of a system for performing user identification information verification.
FIG. 9 is a diagram showing an embodiment of a question and available answer sending unit.
FIG. 10 is a diagram showing an embodiment of an incorrect answer choice generating sub-unit.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

The embodiments described herein are only some, but not all, of the embodiments of the present application. Based on the embodiments included in the present application, all other embodiments obtained by ordinary persons skilled in the art should fall within the scope of protection of the present application.

The present application can be used in many general-purpose or specialized computing device environments or configurations. For example: personal computers, server computers, handheld equipment or portable equipment, tablet equipment, multiprocessor devices, distributed computing environments comprising any of the above devices or equipment, etc.

The present application can be described in the general context of computer executable commands executed by a computer, such as a program module. Generally, program modules include routines, programs, objects, components, data structures, etc. to execute specific tasks or achieve specific abstract data types. The present application can also be carried out in distributed computing environments; in such distributed computing environments, tasks are executed by remote processing equipment connected via communication networks. In distributed computing environments, program modules can be located on storage media at local or remote computers that include storage equipment.

Providing verification of a user's identification information is described herein. In some embodiments, a verification request associated with a user is received. In some embodiments, the account information stored for the user is retrieved. For example, the account information stored for the user may have been information previously submitted by the user to set up the user's account and/or to update the user's profile. Account information may include attributes associated with the user, such as birthdate, blood type, height, and educational background, for example. In some embodiments, a verification question and a plurality of answer choices are dynamically generated based at least in part on the retrieved account information. In some embodiments, at least a first answer choice of the plurality of answer choices is determined based on a user attribute value included in the retrieved account information. In some embodiments, at least a second answer choice of the plurality of answer choices is determined based on a user attribute value included in account information associated with another user. In some embodiments, the verification question and the plurality of answer choices are presented to the user. In some embodiments, one or more selections associated with the plurality of answer choices are received. In some embodiments, whether the user can be verified is determined based at least in part on the selections.

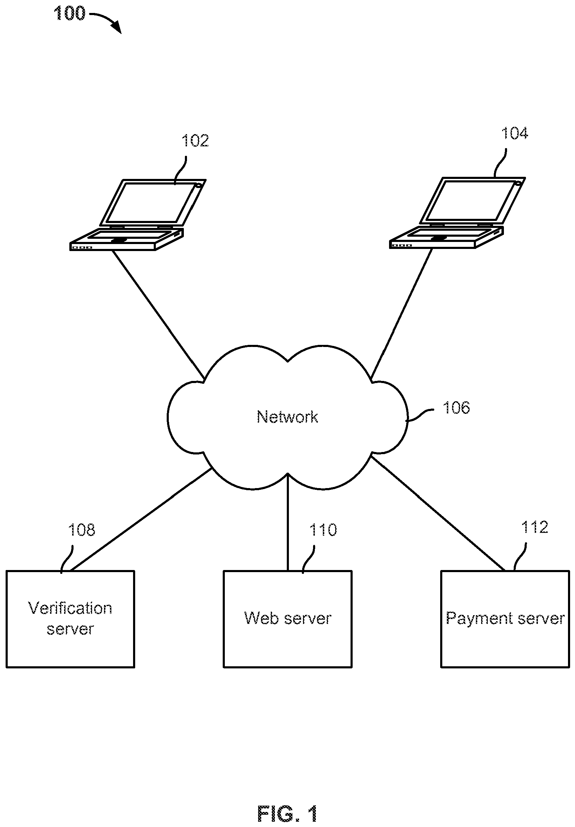

FIG. 1 is a diagram showing an embodiment of a system for providing verification of a user's identification information. In the example, system 100 includes: client 102, client 104, network 106, verification server 108, web server 110, and payment server 112. Network 106 includes high-speed data networks and/or telecommunications networks. Client 102, client 104, verification server 108, web server 110, and payment server 112 may communicate to each other over network 106.

While clients 102 and 104 are shown to be laptops, other examples of clients 102 and 104 may include desktop computers, tablet devices, mobile devices, smart phones, or any other computing devices. A web browser application may be installed at each of clients 102 and 104. In some embodiments, a user may use the web browser application at client 102 to access a website supported by web server 110. For example, the website may comprise an e-commerce website. The user may register for an account at the e-commerce website by submitting values for certain user attributes solicited by web server 110. Examples of user attributes may include birthdate, blood type, telephone number, height, educational background, address, hobbies, and payment information (e.g., bank account information and credit card information). In exchange, web server 110 may provide the user at 102 an account number or account ID that the user may use to log onto the website. Such user attribute values are then stored by web server 110 for the user with the user's account number or account ID.

Later, the same user or a different user may access the website supported by web server 110 using client 104 and sign in with an account number or account ID. The user may browse the website and be presented with a webpage that advertises a certain product that he would like to purchase. The user may select a "Buy now" button at the webpage, for example, which will trigger a verification process to ensure that the user desiring to make a transaction with the logged on account at the website is the actual user of that account. In response to the user's indication to make a transaction at the website (e.g., the user's selection of the "Buy now" button), a message is sent by web server 110 to verification server 108 to perform the verification process. Verification server 108 may query web server 110 for the account information associated with the user. The account information may include user attribute values previously submitted by the user associated with the account. Then verification server 108 is configured to (e.g., randomly) select a subset of the set of user attribute values previously submitted by the user associated with the account to use to generate a verification question and a corresponding set of answer choices. The selected user attribute values form the correct answer choices of the set of answer choices while the incorrect answer choices may be generated by other techniques. Verification server 108 is configured to present the verification question and answer choices to the user at client 104 and then to receive the user's selection(s) from the answer choices. Verification server 108 then determines whether the verification is successful based on the received user's selections. In the event that verification server 108 determines that the verification is successful, verification server 108 notifies web server 110 to permit the transaction to proceed and web server 110 proceeds to permit a transfer of funds (or charging to an account) at payment server 112 to complete the transaction. As described above, once the verification is determined to be successful based on the user's selection(s), the user is not further prompted to provide a password before being able to proceed with the transaction. For example, payment information needed to authenticate a transfer of funds with payment server 112 may be stored with the user's account information by web server 110. Otherwise, in the event that verification server 108 determines that the verification is not successful, then verification server 108 notifies web server 110 to block the transaction and web server 110 does not permit a transfer of funds (or charging to an account) at payment server 112.

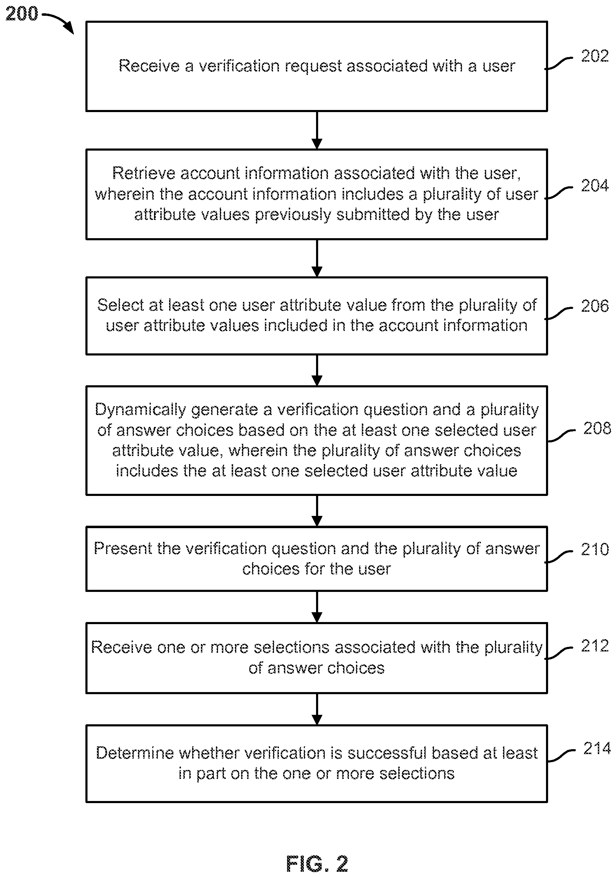

FIG. 2 is a diagram showing an embodiment of a process for providing verification of a user's identification information. In some embodiments, process 200 may be implemented at system 100.

At 202, a verification request associated with a user is received. For example, to shop at an e-commerce website, a user must first register for an account by submitting at least some information about him such as, for example, birthdate, blood type, telephone number, height, educational background, address, hobbies, and payment information (e.g., bank account information and credit card information). For example, a user may decide to make an online payment to buy a certain product at an e-commerce website by making a selection at the website associated with providing an online payment. The user may have logged onto the website using his login information (e.g., an account ID) at some point. Before the user is permitted to complete the payment transaction, which may include transferring funds from a bank account or charging a credit card (associated with the stored payment information), a verification request is issued to verify that the user desiring to make the transaction is in fact the user who is associated with the account that has logged on to the website.

First performing verification on the user prior to permitting the user to complete the transaction helps prevent a user other than the actual user of the logged on account to make online payments from using the actual user's stored payment information. For example, a first user may log onto a website with a web browser at a user terminal, leave without logging out, only to have a second, unauthorized user use the same user terminal and browse the same website. If the second user were allowed to complete transactions at the website using the first user account simply because the first user had not logged out of the website, then the first user will be harmed because the second user may complete a transaction using the credit card information stored for the first user with the first user's account. Therefore, it is important to perform verification on each user that makes a selection to perform a transaction at a website. Presumably, the user associated with the account that is logged on would be able to successfully pass the verification by being able to successfully answer the verification question based on his previously submitted information and make the online payments. Similarly, another user who is not associated with the account that is logged on would not be able to successfully pass the verification because he will not know the information that was previously submitted by the actual user and would therefore be prevented from making online payments.

In some embodiments, in response to a user's selection to perform a transaction at a website (e.g., the user clicks on a "Buy now" button that is presented at the website), a verification request associated with that user is issued on behalf of the user. In some embodiments, the verification request includes identifying information associated with the user.

At 204, account information associated with the user is retrieved, wherein the account information includes a plurality of user attribute values previously submitted by the user. In some embodiments, the account information associated with the user is identified (e.g., based on the user's login information, such as an account number or account ID) and retrieved. The account information includes at least some user attribute values that were previously submitted by the user when, for example, the user was registering with the website or updating a user profile. For example, the website may have solicited values for certain user attributes including one or more of birthdate, blood type, telephone number, height, educational background, address, hobbies, and payment information when the user registered for an account at the website. Such account information was stored for the user with the user's login information or account number/ID. In some embodiments, the same user attributes are solicited by the website from each user but different users may provide different values for the user attributes and so each different user at the website may be distinguished based on that user's set of submitted user attribute values. In some embodiments, the values submitted by users for each user attribute may conform to the same format. For example, for the user attribute of birthdate, the corresponding value may be submitted in the format of "month, day, year." For the user attribute of blood type, the corresponding value must be a letter and optionally, accompanied by a "+" or "-" sign. For the telephone number, the corresponding values may be in the format of "XXX-XXX-XXXX," where each X represents a digit. The values could be extracted from information submitted by the user according to preset rules for different user attribute types.

For example, the birthdate, height, and phone number submitted by user A may be March 5, 1980, 5'9" (five feet nine inches), and 408-555-1234, respectively, while the birthdate, height, and phone number submitted by user B may be April 24, 1977, 6'2" (six feet two inches), and 415-555-9876, respectively.

At 206, at least one user attribute value is selected from the plurality of user attribute values included in the retrieved account information. For example, one or more user attribute values that were previously submitted by the user are selected to use to generate a verification question. In some embodiments, the one or more user attribute values are selected on a random basis.

At 208, a verification question and a plurality of answer choices are dynamically generated based on the at least one selected user attribute value, wherein the plurality of answer choices include the at least one selected user attribute value. In some embodiments, a verification question and a list of answer choices are to be dynamically generated based on the selected one or more user attribute values that were previously submitted by the user. Because the verification question and a plurality of answer choices are dynamically generated each time a user desires to perform an online payment, the verification question and/or answer choices may differ each time the user desires to perform an online payment, which helps to improve the security of the verification. This way, a fraudulent user may not necessarily be able to answer a verification question correctly simply based on discovering a single correct answer from a previously generated verification question.

In some embodiments, the verification question may be generated to inquire about user attribute(s) associated with the selected user attribute values of the user attribute values that were previously submitted by the user. For example, if the verification request was issued for user A and the one selected user attribute value was user A's birthdate of March 5, 1980, then the generated verification question may ask the user to select the correct birthday year (or birthday month or birthday day) of user A's from among a list of answer choices. Such a verification question may comprise "In which year were you born?", "In which month were you born?", or "On which day were you born?" In another example, if the verification request was issued for user A and the one selected user attribute value was user A's height of 5'9", then the generated verification question may ask the user to select the correct height of user A's from among a list of answer choices. Such a verification question may comprise "What is your height in feet and inches?" In yet another example, if the verification request was issued for user A and the one selected user attribute value was user A's phone number 408-555-1234, then the generated verification question may ask the user to select the correct phone number of user A's from among a list of answer choices. Such a verification question may comprise "What is your phone number (including area code)?"

In the embodiments, some answer choices are generated based on the one or more user attribute values selected from the set of user attribute values that was previously submitted by the user and these answer choices represent the correct answers. In the embodiments, some answer choices are generated based on something other than the one or more user attribute values selected from the set of user attribute values that was previously submitted by the user and these answer choices represent incorrect answers. Because the selected one or more user attribute values are taken from previous submissions by the user, they are known to be accurate for the user and therefore correct. In the embodiments, the other answers that represent incorrect answers are selected from a set of predetermined wrong answers (which are checked to be different from the correct answers). In some embodiments, the other answers that represent incorrect answers are selected from the user attribute values that were previously submitted by users other than the user associated with the current verification request (and these user attribute values are checked to be different from the correct answers). By choosing user attribute values to represent the incorrect answer choices, the need to predetermine incorrect answer choices is eliminated and may save time prior to running a verification process. For example, if the verification request was issued for user A and the one selected user attribute value was user A's birthdate of March 5, 1980, then the generated verification question may ask the user to select the correct birthday year of user A's, and the list of answer choices may include a) 1989 b) 1981 c) 1978 d) 1990 e) 1980. In this example, answer choices a) through d) are incorrect (e.g., and may have been chosen from the submitted birthdate of users other than user A) and only answer e) is correct because it matches to the value previously submitted by user A. In this example where there is only one correct answer, only that answer choice may be submitted to answer the verification question successfully. In another, if the verification request was issued for user A and two selected user attribute values were user A's birthdate of March 5, 1980 and user A's phone number is 408-555-1234, then the generated verification question may ask the user to select each true statement regarding user A, and the list of answer choices may include a) born in year 1992 b) born during the month of March c) has phone number 408-555-9595 d) has phone number 408-555-1234 e) none of the above. In this example, answer choices a), c), and e) are incorrect (e.g., and may have been chosen from the submitted birthdate and phone number of users other than user A) and answers b) and d) are correct because they match to the values previously submitted by user A. Because there are multiple correct answers, all correct answer choices (e.g., answer choices b) and d) of the example) must be submitted to answer the verification question successfully. Therefore, if more than one user attribute values are selected to generate the verification question and answer choices, then the answer choice corresponding to each of such selected user attribute values must be selected in order to answer the verification question successfully.

At 210, the verification question and the plurality of answer choices are presented for the user.

In some embodiments, depending on whether one user attribute value is selected to generate the verification question and answer choices or whether more than one user attribute is selected to generate the verification question and answer choices, the answer choices may be presented with either corresponding radio buttons or checkbox selections. In some embodiments, in the event there is just one (single) user attribute value selected to generate the verification question, then radio buttons are presented corresponding to the answer choices (e.g., because the user may only select one radio button at a time). In the event there is more than one (multiple) user attribute value selected to generate the verification question, then checkboxes are presented corresponding to the answer choices (e.g., because the user may select multiple checkboxes at a time). In some embodiments, and as will be further described with process 300, for a transaction that is related to a greater risk level (e.g., a higher value transaction), more than one user attribute value previously stored for the user will be selected to generate the verification question and answer choices and for a transaction that is related to lower risk level (e.g., a lower value transaction), a single user attribute value previously stored for the user will be selected to generate the verification question and answer choices. Regardless of how the answer choices are presented (e.g., whether radio buttons or checkboxes are used), a submit button is also presented with the verification question and answer choices so that the user may submit his selection(s) of answer choices by selecting the submit button.

At 212, one or more selections associated with the plurality of answer choices are received. In some embodiments, the user's selection(s) among the answer choices are received. In some embodiments, the user may submit one or more selections. For example, if radio buttons are presented with the answer choices, then the user may select a single selection. Or if checkboxes are presented with the answer choices, then the user may select multiple selections. If there are multiple correct answers among the choices (i.e., if there is more than one user attribute value selected to generate the correct answers), then each of such correct answers among the answer choices must be selected in order to answer the verification question successfully.

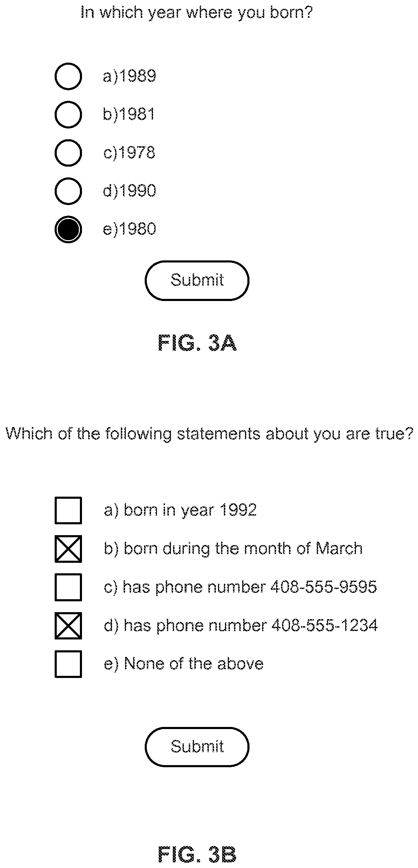

Referring to FIGS. 3A and 3B, FIG. 3A shows an example of a verification question for user A that is presented with answer choices and corresponding radio buttons and FIG. 3B shows an example of a verification question for user A that is presented with answer choices and corresponding checkboxes. FIG. 3A shows that just one answer choice may be selected and submitted by selecting the shown submit button. In the example, answer choice e) 1980 is current selected. FIG. 3B shows that multiple answer choices may be selected (though just one answer choice may be selected as well) and submitted by selecting the shown submit button. In the example, answer choices b) born during the month of March and d) has phone number 408-555-1234 are both currently selected.

Returning to FIG. 2, at 214, it is determined whether verification is successful based at least in part on the one or more selections. In the event the one or more selections correspond to each of the at least one selected user attribute value, the verification is determined to be successful and in the event the one or more selections do not correspond to each of the at least one selected user selected attribute value, the verification is determined to be not successful. In some embodiments, the verification is determined to be successful if the user has selected each of the correct answers among the answer choices presented for the verification question. For example, if there is just one correct answer, then the user must have selected that correct answer (e.g., by selecting its respective radio button) among the choices in order to answer the verification question successfully. If there is more than one correct answer, then the user must have selected each one of the multiple correct answers (e.g., by selecting their respective checkboxes) and not any additional incorrect answers in order to answer the verification question successfully. Referring back to FIG. 3B, assume that answer choices b) and d) are the only correct answers of the question. The verification question of FIG. 3B can only be successfully answered if selections were submitted only for both answer choices b) and d), which are the selected answer choices as shown in the example. For example, the verification will fail if the user selects just one of answer choices a), b), c), d), and e) or if the user selects answer choices a), b) and d) because a) is an incorrect answer.

In the event that the user has successfully answered the verification message, then the user is permitted to continue to complete the desired transaction at the website (e.g., purchase of a product online). In the event that the user has not successfully answered the verification message, then the user is notified of the verification failure and is also blocked from completing the desired transaction at the website. In some embodiments, the use of the described verification question is used in lieu of a prompt for a user password.

As shown with process 200, because the verification questions are dynamically generated based on a (e.g., randomly) selected portion of the information that was previously submitted by the user, it is possible to introduce a lot of variability into the verification questions. Even if the logon information of a user is leaked to another user, it is possible that the other user may not be able to take advantage of the first user's account because the other user may not know enough or any of the first user's user attribute values in order to successfully answer the dynamically generated verification question. This can help to improve the security of the verification technique.

In addition, since the verification questions and verification answers for identity verification are sent separately by the server and the client, respectively, a third party would have to simultaneously intercept both server and client messages in order to illicitly acquire identification information on the actual user. Intercepting both sets of messages may be difficult and this further improves the security of the verification technique.

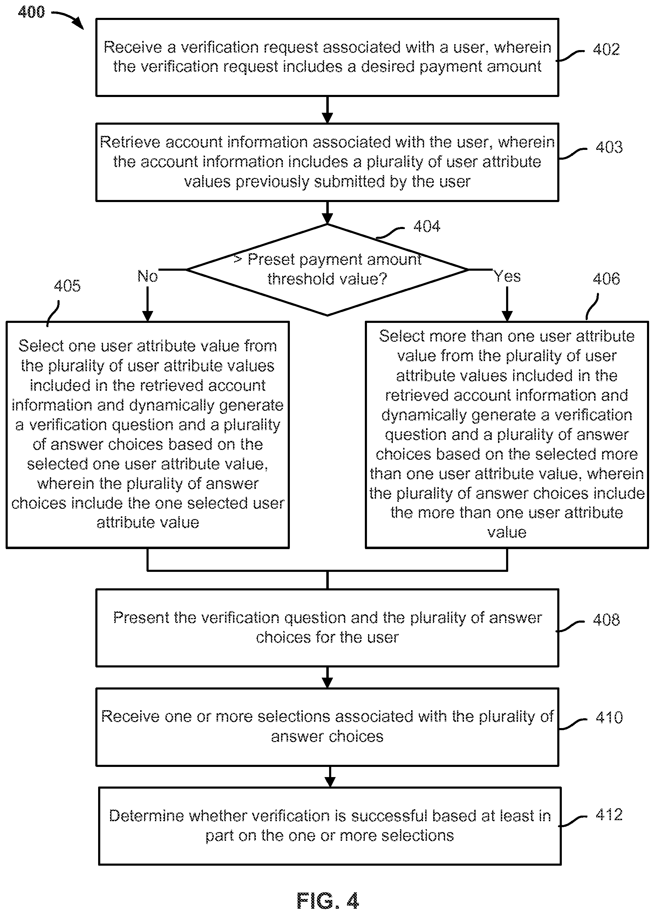

FIG. 4 is a flow diagram showing an embodiment of a process for providing verification of a user's identification information. In some embodiments, process 400 may be performed at system 100.

Process 400 is similar to process 200 except process 400 includes the additional determination of the risk level of a transaction the user for which the verification is being performed desires to complete. As will be described below, the determination of the risk level may be used in determining whether the verification question will be less complex (e.g., just one (a single) user attribute value previously submitted by the user will be selected to generate the verification question and answer choices) or more complex (e.g., more than one (multiple) user attribute value previously submitted by the user will be selected to generate the verification question and answer choices).

At 402, a verification request associated with a user is received, wherein the verification request includes a desired payment amount. In some embodiments, in response to a user's selection to perform a transaction at a website (e.g., the user clicks on a "Buy now" button that is presented at the website), a verification request associated with that user is issued on behalf of the user. In some embodiments, the verification request further includes a price or cost or required payment amount associated with the product that the user wishes to purchase at the website (e.g., e-commerce website). For example, a user who is logged onto an e-commerce website may browse the website and arrive at a particular webpage that advertises a particular product. The user decides to purchase the product and so clicks on a "Buy now" button at the product webpage. In response to the user's selection of the "Buy now" button, a verification request is issued on behalf of the user and the verification request includes identifying information (e.g., an account number) associated with the user in addition to identifying information associated with the product, including the price of the product. The price of the product represents the desired payment amount (e.g., the amount of the online payment the user would need to make) for example, through charging a credit card or transferring funds from a bank account, in order to successfully purchase the product.

At 403, account information associated with the user is retrieved, wherein the account information includes a plurality of user attribute values previously submitted by the user.

At 404, whether a risk level exceeds a preset payment amount threshold value is determined, wherein the risk level is based at least in part on the desired payment amount. In some embodiments, the risk level of the transaction may be determined based at least in part on the size of the desired payment amount. In some embodiments, a preset payment amount threshold value may be configured (e.g., by a system administrator) such that if the desired payment amount exceeds the preset payment amount threshold value, then the transaction may be deemed as a high-risk transaction and if the desired payment amount is less or equal to the preset payment amount threshold value, then the transaction may be deemed as a not high-risk transaction. For example, the configured preset payment amount threshold value may be $1,000 so if a desired payment amount is $900, then it is determined to be a not high-risk transaction but if the desired payment amount is $1,500, then it is determined to be a high-risk transaction. While the example above determines the risk level of the transaction based on the desired payment amount, factors other than the desired payment amount may also be taken into consideration when determining whether the risk level of the transaction exceeds a preset payment amount threshold value.

In the event that the risk level is determined to have exceeded the preset payment amount threshold value, control passes to 406. Otherwise, in the event that the risk level is determined to not have exceeded the preset payment amount threshold value, control passes to 405.

At 405, one user attribute value is selected from the plurality of user attribute values included in the retrieved account information and a verification question and a plurality of answer choices are dynamically generated based on the one selected user attribute value, wherein the plurality of answer choices include the one selected user attribute value. In some embodiments, in the event that just one user attribute value has been selected from the plurality of user attribute values that was previously submitted by the user, the verification question is determined based on the user attribute corresponding to the selected single user attribute value and radio buttons are determined to be presented with the answer choices. For example, radio button verification questions are considered to be less complex and easier for a user to answer correctly than checkbox verification questions because only one correct answer choice may be submitted for each radio button verification question. Because radio button verification questions are easier for a user to answer correctly, they are used with transactions that are determined to not be of high-risk (e.g., the desired payment amount of the transaction is equal or lower than the preset payment amount threshold value).

For example, the radio button verification question may be "How tall are you?" Then from the displayed answer choices, only the answer choice that corresponds to the retrieved user attribute value for the user's attribute of height is the correct answer. The user may successfully answer the radio button verification question if he selected and submitted the radio button associated with the retrieved user attribute value for the user's attribute of height.

At 406, more than one user attribute value is selected from the plurality of user attribute values included in the retrieved account information and a verification question and a plurality of answer choices are dynamically generated based on the more than one selected user attribute value, wherein the plurality of answer choices includes the more than one selected user attribute value. In some embodiments, in the event that multiple user attribute values have been selected from the plurality of user attribute values that was previously submitted by the user, the verification question asks the user to select those, if any, of the answer choices that are true statements and checkboxes are determined to be presented with the answer choices. Checkbox verification questions are considered to be more difficult and more complex for a user to answer correctly than radio button verification questions because potentially multiple correct answer choices need to be submitted for each checkbox verification question. Because checkbox verification questions are more difficult for a user to answer correctly, they are used with transactions that are determined to be of high-risk (e.g., the desired payment amount of the transaction is more than the preset payment amount threshold value).

For example, the checkbox verification question may be "Which of the following are true statements?" The displayed answer choices include a correct birthdate, an incorrect birthdate, a correct blood type, an incorrect blood type, and "None of the above." From the displayed answer choices, both of the answer choices that correspond to the retrieved user attribute values for the user's attributes of birthdate and blood type, respectively, serve as the correct answers. The user may successfully answer the checkbox verification question if he selects and submits both the checkbox associated with the retrieved user attribute value for the user's attribute of birthdate and the checkbox associated with the retrieved user attribute value of the user's blood type.

At 408, the verification question and the plurality of answer choices are presented for the user.

At 410, one or more selections associated with the plurality of answer choices are received.

At 412, it is determined whether verification is successful based at least in part on the one or more selections. In the event the one or more selections correspond to each of the at least one selected user attribute value, the verification is determined to be successful and in the event the one or more selections do not correspond to each of the at least one selected user selected attribute values, the verification is determined to be not successful. For example, if there was a single correct answer among the answer choices (e.g., a radio button verification question was used), then the received selection needs to correspond to the single answer choice that is based on the selected user attribute value that was previously submitted by the user in order to pass the verification. Otherwise, if the received selection corresponds to any other answer choice that is not based on the user attribute value that was selected from the set of user attribute values that was previously submitted by the user, the verification fails. For example, if there was multiple correct answers among the answer choices (e.g., a checkbox verification question was used), then the received selections need to correspond to all the answer choices that are based on the user attribute values that were selected from the set of user attribute values that was previously submitted by the user in order to pass the verification (unless none of the selected values were included in the answer choices and so the "None of the above" checkbox should be the only checkbox that was submitted). Otherwise, if the received selections correspond to any other answer choice that is not based on the user attribute value that was selected from the set of user attribute values that was previously submitted by the user or the received selections correspond to fewer than all of the answer choices that are based on the user attribute values that were selected from the set of user attribute values that was previously submitted by the user, the verification fails.

In the event that the verification is successful, a message indicating that the verification is successful is sent and the transaction is permitted to complete. In the event that the verification fails, a message indicating that the verification has failed is sent and the transaction is prevented from completing.

In some embodiments, in the event the verification is successful, a second verification process may be triggered based on trigger rules that may be configured. For example, in the event a subsequent verification process is triggered by the user passing the first verification question, the transaction may be blocked for the user until the user passes the final verification process. For example, the subsequent verification process may comprise a more complex verification question, such as a question that may entail multiple correct answers related to the user associated with the account.

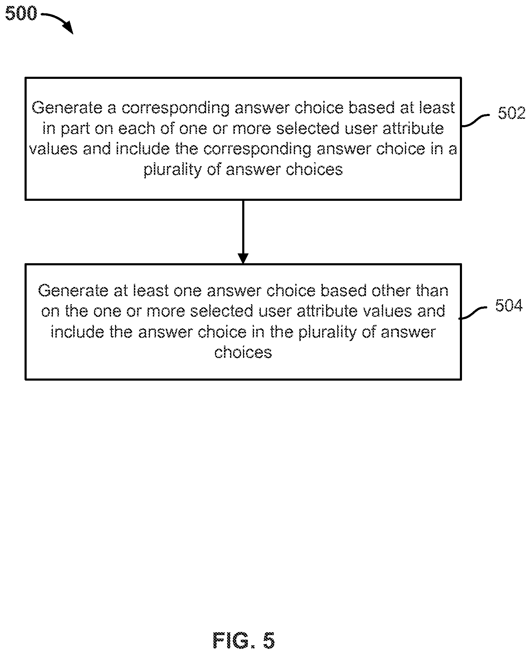

FIG. 5 is a flow diagram showing an embodiment of a process for generating a plurality of answer choices for a verification question. In some embodiments, process 500 may be used to implement 208 of process 200 of FIG. 2, 405 of process 400 of FIG. 4, or 406 of process 400 of FIG. 4.

As described above, a plurality of answer choices is generated for a verification question to be presented to a user based on one or more user attribute values selected from a set of user attribute values that was previously submitted by a user associated with the currently logged on account. In some embodiments, a present number of answer choices are to be generated for each verification question.

At 502, a corresponding answer choice is generated based at least in part on each of one or more selected user attribute values and is included in a plurality of answer choices. A corresponding answer choice is generated based on each user attribute value selected from the set of user attribute values that was previously submitted by a user. An answer choice that is generated based on a selected user attribute value represents a correct answer. For example, if one user attribute value was selected, then one corresponding answer choice is generated and will represent the only correct answer choice (which must be selected by a user to answer the verification question correctly). For example, if three user attribute values were selected, then three corresponding answer choices are generated and will represent the three correct answer choices (all of which must be selected by a user to answer the verification question correctly).

At 504, at least one answer choice is generated based other than on the one or more selected user attribute values and is included in the plurality of answer choices. If there are a preset number of answer choices, then each of the remaining answer choices that is not based on a selected user attribute value that was previously submitted by a user is based on something else. For example, the remaining answer choices may each be selected from the account information of another user (e.g., the user attribute values previously submitted by another user). Each of such remaining answers represents an incorrect answer. To answer a verification question correctly, a user may not select and submit an incorrect answer choice.

For example, if there is a preset total of 5 answer choices to be presented with a verification question, and one of the answer choices is based on a selected user attribute value previously submitted by the user, then the remaining four answer choices may be based on user attribute values that were previously submitted by other users. One advantage of basing such incorrect answer choices on user attribute values previously submitted by other users is to make these wrong answer choices appear plausible so that if the user being verified is not the actual user that is logged on to the website, then the user may be confused into selecting a wrong but plausible answer choice.

In the event that the verification question pertains to a specific user attribute (e.g., birthdate , blood type, height, or telephone number), it will be desirable to select the wrong answer choices associated with user attribute values previously submitted by other users that pertain to the same user attribute. Otherwise, the wrong answer choices will be apparently incorrect if they are not related to the same user attribute that is in the question. For example, if the question is "What is your blood type?" the correct answer choice may be "Type A" and another answer choice may be "October 17, 2011," which is a user attribute value selected from a different user. However, because the wrong answer choice "October 17, 2011" does not pertain to the user attribute of blood type that is included in the question, it will stand out as an incorrect answer that will be apparent to the user. It will be desirable to choose wrong answer choices that are similar to the correct one(s) so that a fraudulent user may be confused into choosing a wrong answer choice and therefore fail the verification.

Process 600, as will be discussed below, provides a technique of selecting user attribute values previously submitted by other users that pertain to the user attribute included in the verification question.

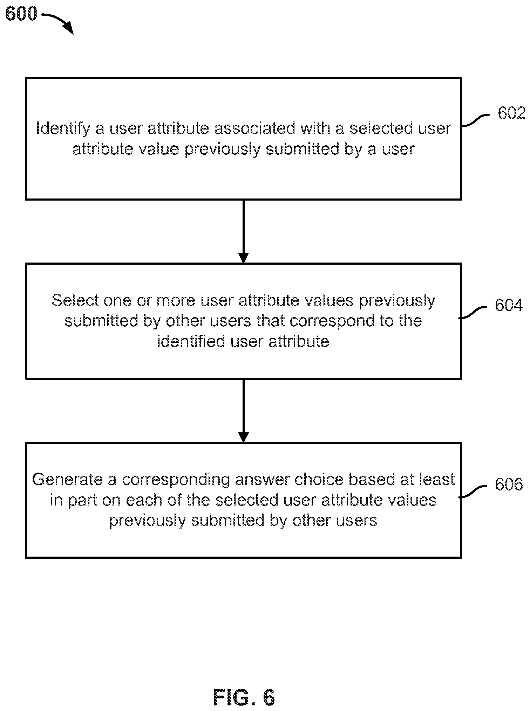

FIG. 6 is a flow diagram showing an embodiment of a process for selecting user attribute values previously submitted by other users that pertain to the user attribute included in the verification question. In some embodiments, process 600 may be used to implement 504 of process 500 of FIG. 5.

At 602, a user attribute associated with a selected user attribute value selected by a user is identified. For example, if the (e.g., randomly) selected user attribute value (to be included as a correct answer choice) was October 23, 2012, then the format of that value may be determined to be associated with the user attribute of birthdate.

At 604, one or more user attribute values previously submitted by other users that correspond to the identified user attribute are selected. Returning to the previous example, if the identified user attribute is birthdate, then the incorrect answer choices are based on the birthdate values submitted by other users. The values submitted by users must be different than the selected value of the user's.

At 606, a corresponding answer choice is generated based at least in part on each of the selected user attribute values previously submitted by other users. These wrong answers are then included in the set of answer choices that are to be shown with the verification question.

In some embodiments, a user is prompted over time to update his account information (e.g., to submit new or updated user attribute values) so that the information upon which the verification is based accurately reflects the current state of the user. For example, an example trigger for such a prompt may be that the user has aggregated a preset quantity of online payments or a preset quantity of instances of making online payments.

Regarding the various method embodiments described above, for the sake of simplicity, all have been presented as combinations of a series of actions; however, persons skilled in the art should be aware that this application is not limited by the sequence of actions described, because pursuant to this application, certain steps may be executed in other sequences or simultaneously.

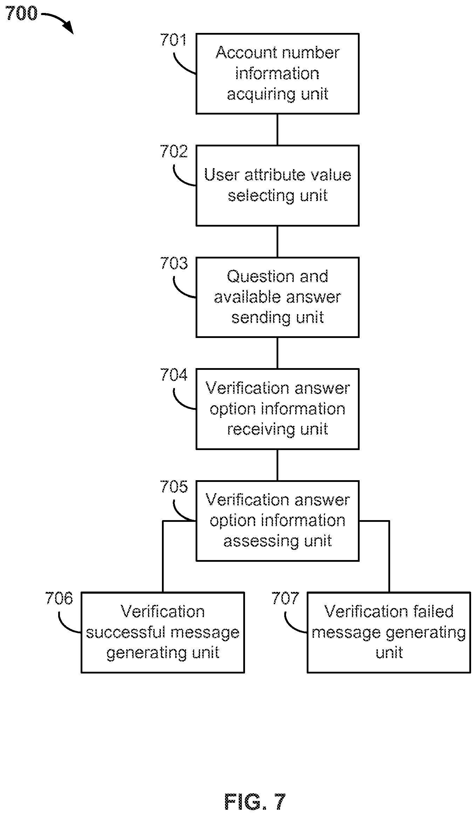

FIG. 7 is a diagram showing an embodiment of a system for performing user identification information verification. In the example, system 700 includes account number information acquiring unit 701, user attribute value selecting unit 702, question and available answer sending unit 703, verification answer option information receiving unit 704, verification answer option information assessing unit 705, verification successful message generating unit 706, and verification failed message generating unit 707.

The units and sub-units can be implemented as software components executing on one or more processors, as hardware such as programmable logic devices and/or Application Specific Integrated Circuits designed to perform certain functions, or a combination thereof. In some embodiments, the units and sub-units can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The units and sub-units may be implemented on a single device or distributed across multiple devices.

Account number information acquiring unit 701 is configured to acquire account information relating to the issuance of verification requests.

User attribute value selecting unit 702 is configured to select at least one user attribute value corresponding to the account number information and such user attribute values were previously submitted by a client and stored on a server.

Question and available answer sending unit 703 is configured to send verification question information and answer choices generated in accordance with the retrieved user attribute values.

Verification answer option information receiving unit 704 is configured to receive one or more selections among the answer choices submitted by the client.

Verification answer option information assessing unit 705 is configured to determine whether the one or more selections correspond to the answer choice(s) generated based on the selected user attribute values that were previously submitted by the user.

Verification successful message generating unit 706 is configured to generate a verification successful message if the assessment result of verification answer option information assessing unit 705 returns that the one or more selections do correspond to the answer choice(s) generated based on the selected user attribute values that were previously submitted by the user.

Verification failed message generating unit 707 is configured to generate a verification failed message if the assessment result of verification answer option information assessing unit 705 returns that the one or more selections do not correspond to the answer choice(s) generated based on the selected user attribute values that were previously submitted by the user.

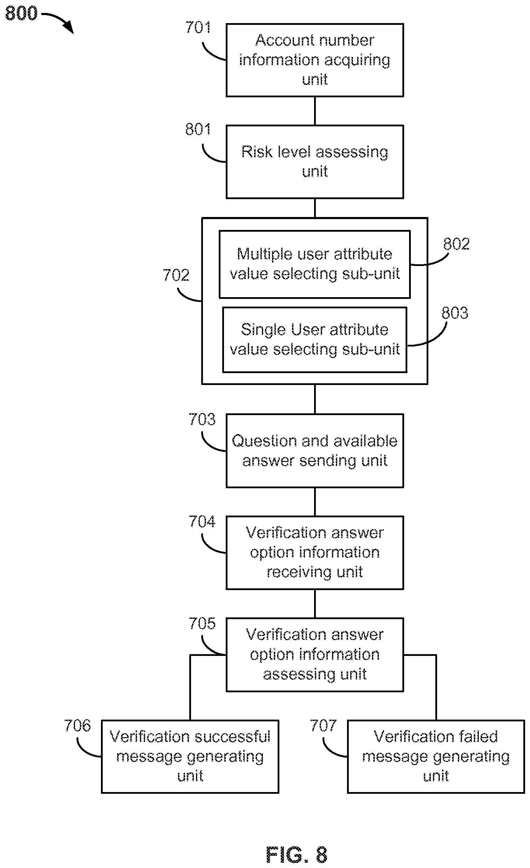

FIG. 8 is a diagram showing another embodiment of a system for performing user identification information verification. In the example, system 800 includes account number information acquiring unit 701, user attribute value selecting unit 702, multiple user attribute value selecting sub-unit 802, single user attribute value selecting sub-unit 803, question and available answer sending unit 703, verification answer option information receiving unit 704, verification answer option information assessing unit 705, verification successful message generating unit 706, and verification failed message generating unit 707. System 800 is similar to system 700 but includes additional unit 801 and sub-units 802 and 803.

Account number information acquiring unit 701 is configured to acquire account information relating to the issuance of verification requests.

Risk level assessing unit 801 is configured to determine whether the risk level for the transaction exceeds the preset payment amount threshold value.

User attribute value selecting unit 702 is configured to select at least one user attribute value corresponding to the account number information and such user attribute values were previously submitted by a client and stored on a server. User attribute value selecting unit 702 further includes:
Multiple user attribute value selecting sub-unit 802 that is configured to select multiple user attribute values in the event that risk level assessing unit 801 indicates that the desired payment amount of the transaction exceeds the preset threshold value.

Single user attribute value selecting sub-unit 803 that is configured to select a single user attribute value in the event that the risk level indicates that the desired payment amount of the transaction equals or is less than the preset threshold value.

Question and available answer sending unit 703 that is configured to send verification question information and answer choices generated in accordance with the retrieved user attribute values.

Verification answer option information receiving unit 704 that is configured to receive one or more selections among the answer choices submitted by the client.

Verification answer option information assessing unit 705 that is configured to determine whether the one or more selections correspond to the answer choice(s) generated based on the selected user attribute values that were previously submitted by the user.

Verification successful message generating unit 706 that is configured to generate a verification successful message if the assessment result of verification answer option information assessing unit 705 returns that the one or more selections do correspond to the answer choice(s) generated based on the selected user attribute values that were previously submitted by the user.

Verification failed message generating unit 707 is configured to generate a verification failed message if the assessment result of verification answer option information assessing unit 705 returns that the one or more selections do not correspond to the answer choice(s) generated based on the selected user attribute values that were previously submitted by the user.

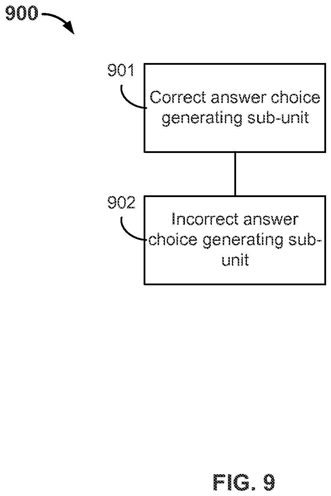

FIG. 9 is a diagram showing an embodiment of a question and available answer sending unit. In some embodiments, question and available answer sending unit 703 of system 700 of FIG. 7 and system 800 of FIG. 8 may be implemented using the example of system 900 of FIG. 9. In the example, the question and available answer sending unit includes:

Correct answer choice generating sub-unit 901 that is configured to generate a corresponding correct answer choice for each selected user attribute value of the set of user attribute values that was previously submitted by the user.

Incorrect answer choice generating sub-unit 902 that is configured to generate a corresponding incorrect answer choice for each selected user attribute value of the user attribute values that were previously submitted by other users.

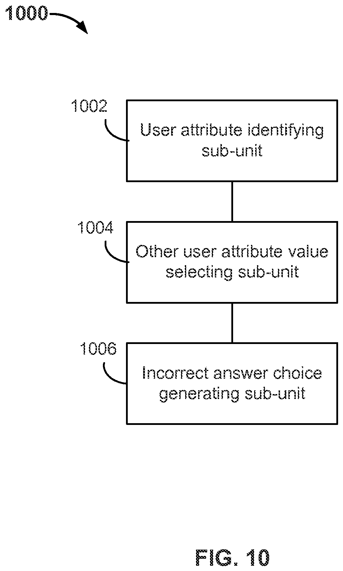

FIG. 10 is a diagram showing an embodiment of an incorrect answer choice generating sub-unit. In the example of system 1000, the incorrect answer choice generating sub-unit includes:
User attribute identifying sub-unit 1002 that is configured to identify the user attribute corresponding to the selected user attribute value that was previously submitted by the user.

Other user attribute value selecting sub-unit 1004 that is configured to select one or more user attribute values previously submitted by other users that correspond to the identified user attribute.

Incorrect answer choice generating sub-unit 1006 that is configured to generate a corresponding answer choice is generated based at least in part on each of the selected user attribute values previously submitted by other users.

To improve the verification technique, the verification system may further comprise:
An update trigger condition assessing unit that is configured to determine whether the user attribute values and/or the aggregate payment amount corresponding to the account number satisfy a preset update trigger condition.

An identification information keyword update request sending unit that is configured to send to the client a request to update the user attribute values in the event the update trigger condition assessing unit indicates that an update is to be prompted.

It must be explained that each of the embodiments contained in the present application is described in a progressive manner, the explanation of each embodiment focuses on areas of difference from the other embodiments, and the descriptions thereof may be mutually referenced for portions of each embodiment that are identical or similar. In regard to device-type embodiments, because they are fundamentally similar to the method embodiments, their descriptions are relatively simple. Refer to partial explanations in the method embodiments where relevant.

Lastly, it must also be explained that, in this document, relational terms such as "first" or "second" are used only to differentiate between one entity or operation and another entity or operation, without necessitating or implying that there is any such actual relationship or sequence between these entities or operations. Furthermore, the terms "comprise" or "contain" or any of their variants are to be taken in their non-exclusive sense. Thus, processes, methods, objects, or equipment that comprise a series of elements not only comprise those elements, but also comprise other elements that have not been explicitly listed or elements that are intrinsic to such processes, methods, objects, or equipment. In the absence of further limitations, for an element that is limited by the phrase "comprises a(n)...," the existence of additional identical elements in processes, methods, objects or equipment that comprise said elements is not excluded.

For convenience of description, when describing the device above, functions are described as separate units. Of course, during implementation of the present application, the functions of the various units may be achieved in the same or multiple software and/or hardware configurations.

As can be seen through the description of the embodiment above, persons skilled in the art can clearly understand that the present application can be realized with the aid of software plus the necessary common hardware platform. Based on such an understanding, the technical proposal of the present application, whether intrinsically or with respect to portions that contribute to the prior art, is realizable in the form of software products. These computer software products can be stored on storage media, such as ROM/RAM, diskettes, and compact discs, and include a certain number of commands used to cause a set of computing equipment (which could be a personal computer, server, or network equipment) to execute the methods described in the embodiments, or certain portions of the embodiments, of the present application.

A search method, device, and system provided by the present application have been described in detail above. This document has employed specific examples to expound the principles and embodiments of the present application. The above embodiment explanations are only meant to aid in comprehension of the methods of the present application and of its core concepts. Moreover, a person with ordinary skill in the art would, on the basis of the concepts of the present application, be able to make modifications to specific applications and to the scope of applications. To summarize the above, the contents of this description should not be understood as limiting the present application.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A system for providing verification, comprising:
one or more processors configured to:
receive a verification request (202) associated with a user;
retrieve account information (204) associated with the user, wherein the account information includes a plurality of user attribute values previously submitted by the user;
select at least one user attribute value (206) from the plurality of user attribute values included in the account information;
dynamically generate a verification question (208) and a plurality of answer choices based on the at least one selected user attribute value, wherein the plurality of answer choices includes the at least one selected user attribute value, and wherein the generating of the plurality of answer choices comprises:
generate at least one answer choice that is incorrect based on a user attribute value previously submitted by another user, the other user being different from the user;
compare a desired payment amount associated with a transaction to a preset payment amount threshold value, wherein in the event that the desired payment amount exceeds the payment amount threshold value (404), the plurality of answer choices includes multiple correct answers (406) based at least in part on the at least one selected user attribute value;
present the verification question (210) and the plurality of answer choices for the user;
receive one or more selections (212) associated with the plurality of answer choices; and
determine whether the verification is successful (214) based at least in part on the one or more selections, wherein in the event that the plurality of answer choices includes multiple correct answers, the verification is successful in the event that the received one or more selections corresponds to a plurality of selections and the plurality of selections corresponds to the multiple correct answers; and
one or more memories coupled to the one or more processors and configured to provide the one or more processors with instructions.

2. The system of Claim 1, wherein in the event that the desired payment amount does not exceed the payment amount threshold value, the plurality of answer choices includes a single correct answer based at least in part on the at least one selected user attribute value.

3. The system of Claim 1, wherein to generate the at least one answer choice that is incorrect includes to:
identify a user attribute (602) associated with the at least one selected user attribute value;
select one or more user attribute values (604) previously submitted by other users that correspond to the identified user attribute; and
generate the at least one answer choice that is incorrect (606) based at least in part on each of the selected user attribute values previously submitted by other users.

4. The system of Claim 1, wherein in the event the one or more selections do not correspond to each of the at least one selected user attribute value, the verification is determined to be not successful.

5. The system of Claim 1, wherein in the event that the verification is determined to be successful, the one or more processors are further configured to permit the transaction associated with the verification request to proceed without further requesting a user password.

6. The system of Claim 1, wherein in the event that the verification is determined to be not successful, the one or more processors are further configured to block the transaction associated with the verification request.

7. The system of Claim 1, wherein the at least one user attribute value relates to birthdate, blood type, telephone number, height, educational background, address, hobby, payment information, or any combination thereof.

8. A method for providing verification, comprising:
receiving a verification request (202) associated with a user;
retrieving account information associated with the user (204), wherein the account information includes a plurality of user attribute values previously submitted by the user;
selecting at least one user attribute value (206) from the plurality of user attribute values included in the account information;
dynamically generating (208), using a processor, a verification question and a plurality of answer choices based on the at least one selected user attribute value, wherein the plurality of answer choices includes the at least one selected user attribute value, and wherein the generating of the plurality of answer choices comprises:
generating at least one answer choice that is incorrect based on a user attribute value previously submitted by another user, the other user being different from the user;
comparing a desired payment amount associated with a transaction to a preset payment amount threshold value, wherein in the event that the desired payment amount exceeds the payment amount threshold value (404), the plurality of answer choices includes multiple correct answers (406) based at least in part on the at least one selected user attribute value;
presenting the verification question (210) and the plurality of answer choices for the user;
receiving one or more selections (212) associated with the plurality of answer choices; and
determining whether the verification is successful (214) based at least in part on the one or more selections, wherein in the event that the plurality of answer choices includes multiple correct answers, the verification is successful in the event that the received one or more selections corresponds to a plurality of selections and the plurality of selections corresponds to the multiple correct answers.

9. The method of Claim 8, wherein in the event that the desired payment amount does not exceed the payment amount threshold value, the plurality of answer choices includes a single correct answer based at least in part on the at least one selected user attribute value.

10. The method of Claim 8, wherein generating the at least one answer choice that is incorrect includes:
identifying a user attribute (602) associated with the at least one selected user attribute value;
selecting one or more user attribute values (604) previously submitted by other users that correspond to the identified user attribute; and
generating the at least one answer choice that is incorrect (606) based at least in part on each of the selected user attribute values previously submitted by other users.

11. The method of Claim 8, wherein in the event the one or more selections do not correspond to each of the at least one selected user attribute value, the verification is determined to be not successful.

12. The method of Claim 8, wherein in the event that the verification is determined to be successful, further comprising permitting the transaction associated with the verification request to proceed without further requesting a user password.

13. The method of Claim 8, wherein in the event that the verification is determined to be not successful, further comprising blocking the transaction associated with the verification request.

14. A computer program product for providing verification, the computer program product being embodied in a non-transitory computer readable storage medium and comprising computer instructions for:
receiving a verification request (202) associated with a user;
retrieving account information (204) associated with the user, wherein the account information includes a plurality of user attribute values previously submitted by the user;
selecting at least one user attribute value (206) from the plurality of user attribute values included in the account information;
dynamically generating a verification question (208) and a plurality of answer choices based on the at least one selected user attribute value, wherein the plurality of answer choices includes the at least one selected user attribute value, and wherein the generating of the plurality of answer choices comprises:
generating at least one answer choice that is incorrect from based on a user attribute value previously submitted by another user, the other user being different from the user;
comparing a desired payment amount associated with a transaction to a preset payment amount threshold value, wherein in the event that the desired payment amount exceeds the payment amount threshold value (404), the plurality of answer choices includes multiple correct answers (406) based at least in part on the at least one selected user attribute value;
presenting the verification question (210) and the plurality of answer choices for the user;
receiving one or more selections (212) associated with the plurality of answer choices; and
determining whether the verification is successful (214) based at least in part on the one or more selections, wherein in the event that the plurality of answer choices includes multiple correct answers, the verification is successful in the event that the received one or more selections corresponds to a plurality of selections and the plurality of selections corresponds to the multiple correct answers.

## Patentansprüche

1. System zum Bereitstellen einer Überprüfung, umfassend:
einen oder mehrere Prozessoren, die für Folgendes konfiguriert sind:
Empfangen einer mit einem Benutzer assoziierten Überprüfungsanforderung (202);
Abrufen von mit dem Benutzer assoziierten Kontoinformationen (204), wobei die Kontoinformationen eine Vielzahl von zuvor vom Benutzer übermittelten Benutzerattributwerten enthalten;
Auswählen mindestens eines Benutzerattributwerts (206) aus der in den Kontoinformationen enthaltenen Vielzahl von Benutzerattributwerten;
dynamisches Generieren einer Überprüfungsfrage (208) und einer Vielzahl von Antwortmöglichkeiten basierend auf dem mindestens einen ausgewählten Benutzerattributwert, wobei die Vielzahl von Antwortmöglichkeiten den mindestens einen ausgewählten Benutzerattributwert enthält und wobei das Generieren der Vielzahl von Antwortmöglichkeiten Folgendes umfasst:
Generieren mindestens einer Antwortmöglichkeit, die nicht richtig ist, basierend auf einem zuvor von einem weiteren Benutzer übermittelten Benutzerattributwert, wobei der weitere Benutzer ein anderer als der Benutzer ist;
Vergleichen eines gewünschten Zahlungsbetrags, der mit einer Transaktion assoziiert ist, mit einem vorgegebenen Zahlungsbetragsgrenzwert, wobei die Vielzahl von Antwortmöglichkeiten, falls der gewünschte Zahlungsbetrag über den Zahlungsbetragsgrenzwert (404) hinausgeht, mehrere richtige Antworten (406) mindestens teilweise basierend auf dem mindestens einen ausgewählten Benutzerattributwert enthält;
Präsentieren der Überprüfungsfrage (210) und der Vielzahl von Antwortmöglichkeiten für den Benutzer;
Empfangen einer oder mehrerer mit der Vielzahl von Antwortmöglichkeiten assoziierter Auswahlmöglichkeiten (212); und
Ermitteln, ob die Überprüfung erfolgreich ist (214), mindestens teilweise basierend auf der einen oder den mehreren Auswahlmöglichkeiten, wobei die Überprüfung, falls die Vielzahl von Antwortmöglichkeiten mehrere richtige Antworten enthält, erfolgreich ist, falls die empfangene eine oder die empfangenen mehreren Auswahlmöglichkeiten mit einer Vielzahl von Auswahlmöglichkeiten korrespondieren und die Vielzahl von Auswahlmöglichkeiten mit den mehreren richtigen Antworten korrespondiert; und
einen oder mehrere Speicherbausteine, die an den einen oder die mehreren Prozessoren gekoppelt und konfiguriert sind, um für den einen oder die mehreren Prozessoren Anweisungen bereitzustellen.

2. System nach Anspruch 1, wobei die Vielzahl von Antwortmöglichkeiten, falls der gewünschte Zahlungsbetrag nicht über den Zahlungsbetragsgrenzwert hinausgeht, nur eine richtige Antwort mindestens teilweise basierend auf dem mindestens einen ausgewählten Benutzerattributwert enthält.

3. System nach Anspruch 1, wobei das Generieren der mindestens einen Antwortmöglichkeit, die nicht richtig ist, Folgendes enthält:
Identifizieren eines Benutzerattributs (602), das mit dem mindestens einen ausgewählten Benutzerattributwert assoziiert ist;
Auswählen eines oder mehrerer Benutzerattributwerte (604), die zuvor von weiteren Benutzern übermittelt wurden und mit dem identifizierten Benutzerattribut korrespondieren; und
Generieren der mindestens einen Antwortmöglichkeit, die nicht richtig ist (606), mindestens teilweise basierend auf jedem der ausgewählten Benutzerattributwerte, die zuvor von weiteren Benutzern übermittelt wurden.

4. System nach Anspruch 1, wobei, falls die eine oder die mehreren Auswahlmöglichkeiten nicht mit jedem von dem mindestens einen ausgewählten Benutzerattributwert korrespondieren, ermittelt wird, dass die Überprüfung nicht erfolgreich ist.

5. System nach Anspruch 1, wobei der eine oder die mehreren Prozessoren, falls ermittelt wird, dass die Überprüfung erfolgreich ist, weiter konfiguriert sind, um die Fortsetzung der mit der Überprüfungsanforderung assoziierten Transaktion, ohne dass ferner ein Benutzerpasswort angefordert wird, zu erlauben.

6. System nach Anspruch 1, wobei der eine oder die mehreren Prozessoren, falls ermittelt wird, dass die Überprüfung nicht erfolgreich ist, weiter konfiguriert sind, um die mit der Überprüfungsanforderung assoziierte Transaktion zu blockieren.

7. System nach Anspruch 1, wobei der mindestens eine Benutzerattributwert auf ein Geburtsdatum, eine Blutgruppe, eine Telefonnummer, eine Körpergröße, eine Ausbildung, eine Adresse, ein Hobby, Zahlungsinformationen oder eine beliebige Kombination davon bezogen ist.

8. Verfahren zum Bereitstellen einer Überprüfung, umfassend:
Empfangen einer mit einem Benutzer assoziierten Überprüfungsanforderung (202);
Abrufen von mit dem Benutzer (204) assoziierten Kontoinformationen, wobei die Kontoinformationen eine Vielzahl von zuvor vom Benutzer übermittelten Benutzerattributwerten enthalten;
Auswählen mindestens eines Benutzerattributwerts (206) aus der in den Kontoinformationen enthaltenen Vielzahl von Benutzerattributwerten;
dynamisches Generieren (208) einer Überprüfungsfrage und einer Vielzahl von Antwortmöglichkeiten unter Nutzung eines Prozessors basierend auf dem mindestens einen ausgewählten Benutzerattributwert, wobei die Vielzahl von Antwortmöglichkeiten den mindestens einen ausgewählten Benutzerattributwert enthält und wobei das Generieren der Vielzahl von Antwortmöglichkeiten Folgendes umfasst:
Generieren mindestens einer Antwortmöglichkeit, die nicht richtig ist, basierend auf einem zuvor von einem weiteren Benutzer übermittelten Benutzerattributwert, wobei der weitere Benutzer ein anderer als der Benutzer ist;
Vergleichen eines gewünschten Zahlungsbetrags, der mit einer Transaktion assoziiert ist, mit einem vorgegebenen Zahlungsbetragsgrenzwert, wobei die Vielzahl von Antwortmöglichkeiten, falls der gewünschte Zahlungsbetrag über den Zahlungsbetragsgrenzwert (404) hinausgeht, mehrere richtige Antworten (406) mindestens teilweise basierend auf dem mindestens einen ausgewählten Benutzerattributwert enthält;
Präsentieren der Überprüfungsfrage (210) und der Vielzahl von Antwortmöglichkeiten für den Benutzer;
Empfangen einer oder mehrerer mit der Vielzahl von Antwortmöglichkeiten assoziierter Auswahlmöglichkeiten (212); und
Ermitteln, ob die Überprüfung erfolgreich ist (214), mindestens teilweise basierend auf der einen oder den mehreren Auswahlmöglichkeiten, wobei die Überprüfung, falls die Vielzahl von Antwortmöglichkeiten mehrere richtige Antworten enthält, erfolgreich ist, falls die empfangene eine oder die empfangenen mehreren Auswahlmöglichkeiten mit einer Vielzahl von Auswahlmöglichkeiten korrespondieren und die Vielzahl von Auswahlmöglichkeiten mit den mehreren richtigen Antworten korrespondiert.

9. Verfahren nach Anspruch 8, wobei die Vielzahl von Antwortmöglichkeiten, falls der gewünschte Zahlungsbetrag nicht über den Zahlungsbetragsgrenzwert hinausgeht, nur eine richtige Antwort mindestens teilweise basierend auf dem mindestens einen ausgewählten Benutzerattributwert enthält.

10. Verfahren nach Anspruch 8, wobei das Generieren der mindestens einen Antwortmöglichkeit, die nicht richtig ist, Folgendes enthält:
Identifizieren eines Benutzerattributs (602), das mit dem mindestens einen ausgewählten Benutzerattributwert assoziiert ist;
Auswählen eines oder mehrerer Benutzerattributwerte (604), die zuvor von weiteren Benutzern übermittelt wurden und mit dem identifizierten Benutzerattribut korrespondieren; und
Generieren der mindestens einen Antwortmöglichkeit, die nicht richtig ist (606), mindestens teilweise basierend auf jedem der ausgewählten Benutzerattributwerte, die zuvor von weiteren Benutzern übermittelt wurden.

11. Verfahren nach Anspruch 8, wobei, falls die eine oder die mehreren Auswahlmöglichkeiten nicht mit jedem von dem mindestens einen ausgewählten Benutzerattributwert korrespondieren, ermittelt wird, dass die Überprüfung nicht erfolgreich ist.

12. Verfahren nach Anspruch 8, wobei, falls ermittelt wird, dass die Überprüfung erfolgreich ist, weiter umfassend Erlauben der Fortsetzung der mit der Überprüfungsanforderung assoziierten Transaktion, ohne dass ferner ein Benutzerpasswort angefordert wird.

13. Verfahren nach Anspruch 8, wobei, falls ermittelt wird, dass die Überprüfung nicht erfolgreich ist, weiter umfassend Blockieren der mit der Überprüfungsanforderung assoziierten Transaktion.

14. Computerprogrammprodukt zum Bereitstellen einer Überprüfung, wobei das Computerprogrammprodukt in einem nicht transienten, computerlesbaren Speichermedium realisiert ist und Computeranweisungen für Folgendes umfasst:
Empfangen einer mit einem Benutzer assoziierten Überprüfungsanforderung (202);
Abrufen von mit dem Benutzer assoziierten Kontoinformationen (204), wobei die Kontoinformationen eine Vielzahl von zuvor vom Benutzer übermittelten Benutzerattributwerten enthalten;
Auswählen mindestens eines Benutzerattributwerts (206) aus der in den Kontoinformationen enthaltenen Vielzahl von Benutzerattributwerten;
dynamisches Generieren einer Überprüfungsfrage (208) und einer Vielzahl von Antwortmöglichkeiten basierend auf dem mindestens einen ausgewählten Benutzerattributwert, wobei die Vielzahl von Antwortmöglichkeiten den mindestens einen ausgewählten Benutzerattributwert enthält und wobei das Generieren der Vielzahl von Antwortmöglichkeiten Folgendes umfasst:
Generieren mindestens einer Antwortmöglichkeit, die nicht richtig ist, basierend auf einem zuvor von einem weiteren Benutzer übermittelten Benutzerattributwert, wobei der weitere Benutzer ein anderer als der Benutzer ist;
Vergleichen eines gewünschten Zahlungsbetrags, der mit einer Transaktion assoziiert ist, mit einem vorgegebenen Zahlungsbetragsgrenzwert, wobei die Vielzahl von Antwortmöglichkeiten, falls der gewünschte Zahlungsbetrag über den Zahlungsbetragsgrenzwert (404) hinausgeht, mehrere richtige Antworten (406) mindestens teilweise basierend auf dem mindestens einen ausgewählten Benutzerattributwert enthält;
Präsentieren der Überprüfungsfrage (210) und der Vielzahl von Antwortmöglichkeiten für den Benutzer;
Empfangen einer oder mehrerer mit der Vielzahl von Antwortmöglichkeiten assoziierter Auswahlmöglichkeiten (212); und
Ermitteln, ob die Überprüfung erfolgreich ist (214), mindestens teilweise basierend auf der einen oder den mehreren Auswahlmöglichkeiten, wobei die Überprüfung, falls die Vielzahl von Antwortmöglichkeiten mehrere richtige Antworten enthält, erfolgreich ist, falls die empfangene eine oder die empfangenen mehreren Auswahlmöglichkeiten mit einer Vielzahl von Auswahlmöglichkeiten korrespondieren und die Vielzahl von Auswahlmöglichkeiten mit den mehreren richtigen Antworten korrespondiert.

## Revendications

1. Système permettant d'assurer une vérification, comprenant :
un ou plusieurs processeurs configurés pour :
recevoir une demande de vérification (202) associée à un utilisateur ;
récupérer une information de compte (204) associée à l'utilisateur, l'information de compte incluant une pluralité de valeurs d'attribut d'utilisateur envoyées précédemment par l'utilisateur ;
sélectionner au moins une valeur d'attribut d'utilisateur (206) parmi la pluralité de valeurs d'attribut d'utilisateur incluses dans l'information de compte ;
générer dynamiquement une question de vérification (208) et une pluralité de choix de réponse sur la base de l'au moins une valeur d'attribut d'utilisateur, la pluralité de choix de réponse incluant l'au moins une valeur d'attribut d'utilisateur sélectionnée, et la génération de la pluralité de choix de réponse comprend les étapes consistant à :
générer au moins un choix de réponse incorrect, sur la base d'une valeur d'attribut d'utilisateur envoyée précédemment par un autre utilisateur, l'autre utilisateur étant différent de l'utilisateur ;
comparer un montant de paiement souhaité, associé à une transaction, à une valeur-seuil prédéfinie de montant de paiement, et au cas où le montant de paiement souhaité dépasserait la valeur-seuil de montant de paiement (404), la pluralité de choix de réponse inclura de multiples bonnes réponses (406) sur la base, au moins en partie, de l'au moins une valeur d'attribut d'utilisateur sélectionnée ;
présenter la question de vérification (210) et la pluralité de choix de réponse à l'utilisateur ;
recevoir une ou plusieurs sélections (212) associées à la pluralité de choix de réponse ; et
déterminer si la vérification est réussie (214) sur la base, au moins en partie, de la ou des sélections, et au cas où la pluralité de choix de réponse inclurait de multiples bonnes réponses, la vérification sera réussie si la ou les sélections reçues correspondent à une pluralité de sélections et si la pluralité de sélections correspond aux multiples bonnes réponses ; et
une ou plusieurs mémoires couplées au ou aux processeurs, et configurées pour fournir des instructions au ou aux processeurs.

2. Système selon la revendication 1, dans lequel, au cas où le montant de paiement souhaité ne dépasserait pas la valeur-seuil de montant de paiement, la pluralité de choix de réponse inclura une unique bonne réponse sur la base, au moins en partie, de l'au moins une valeur d'attribut d'utilisateur sélectionnée.

3. Système selon la revendication 1, dans lequel la génération de l'au moins un choix de réponse incorrect comprend les étapes consistant à :
identifier un attribut d'utilisateur (602) associé à l'au moins une valeur d'attribut d'utilisateur sélectionnée ;
sélectionner une ou plusieurs valeurs d'attribut d'utilisateur (604) envoyées précédemment par d'autres utilisateurs et correspondant à l'attribut d'utilisateur identifié ; et
générer l'au moins un choix de réponse incorrect (606) sur la base, au moins en partie, de chacune des valeurs d'attribut d'utilisateur sélectionnées envoyées précédemment par d'autres utilisateurs.

4. Système selon la revendication 1, dans lequel, au cas où la ou les sélections ne correspondraient pas à chacune de l'au moins une valeur d'attribut d'utilisateur sélectionnée, la vérification sera déterminée comme n'étant pas réussie.

5. Système selon la revendication 1, dans lequel, au cas où la vérification serait déterminée comme étant réussie, la ou les processeurs seront en outre configurés pour autoriser la poursuite de la transaction associée à la demande de vérification sans demander en outre un mot de passe d'utilisateur.

6. Système selon la revendication 1, dans lequel, au cas où la vérification serait déterminée comme n'étant pas réussie, la ou les processeurs seront en outre configurés pour bloquer la transaction associée à la demande de vérification.

7. Système selon la revendication 1, dans lequel l'au moins une valeur d'attribut d'utilisateur se rapporte à une date de naissance, un groupe sanguin, un numéro de téléphone, une taille, une formation scolaire, une adresse, un passe-temps, une information de paiement ou une quelconque combinaison de ceux-ci.

8. Procédé permettant d'assurer une vérification, comprenant les étapes consistant à :
recevoir une demande de vérification (202) associée à un utilisateur ;
récupérer une information de compte associée à l'utilisateur (204), l'information de compte incluant une pluralité de valeurs d'attribut d'utilisateur envoyées précédemment par l'utilisateur ;
sélectionner au moins une valeur d'attribut d'utilisateur (206) parmi la pluralité de valeurs d'attribut d'utilisateur incluses dans l'information de compte ;
générer dynamiquement (208), au moyen d'un processeur, une question de vérification et une pluralité de choix de réponse sur la base de l'au moins une valeur d'attribut d'utilisateur sélectionnée, la pluralité de choix de réponse incluant l'au moins une valeur d'attribut d'utilisateur sélectionnée, et la génération de la pluralité de choix de réponse comprenant les étapes consistant à :
générer au moins un choix de réponse incorrect, sur la base d'une valeur d'attribut d'utilisateur envoyée précédemment par un autre utilisateur, l'autre utilisateur étant différent de l'utilisateur ;
comparer un montant de paiement souhaité, associé à une transaction, à une valeur-seuil prédéfinie de montant de paiement, et au cas où le montant de paiement souhaité dépasserait la valeur-seuil de montant de paiement (404), la pluralité de choix de réponse inclura de multiples bonnes réponses (406) sur la base, au moins en partie, de l'au moins une valeur d'attribut d'utilisateur sélectionnée ;
présenter la question de vérification (210) et la pluralité de choix de réponse à l'utilisateur ;
recevoir une ou plusieurs sélections (212) associées à la pluralité de choix de réponse ; et
déterminer si la vérification est réussie (214) sur la base, au moins en partie, de la ou des sélections, et au cas où la pluralité de choix de réponse inclurait de multiples bonnes réponses, la vérification sera réussie si la ou les sélections reçues correspondent à une pluralité de sélections et si la pluralité de sélections correspond aux multiples bonnes réponses.

9. Procédé selon la revendication 8, dans lequel, au cas où le montant de paiement souhaité ne dépasserait pas la valeur-seuil de montant de paiement, la pluralité de choix de réponse inclura une unique bonne réponse sur la base, au moins en partie, de l'au moins une valeur d'attribut d'utilisateur sélectionnée.

10. Procédé selon la revendication 8, dans lequel la génération de l'au moins un choix de réponse incorrect comprend les étapes consistant à :
identifier un attribut d'utilisateur (602) associé à l'au moins une valeur d'attribut d'utilisateur sélectionnée ;
sélectionner une ou plusieurs valeurs d'attribut d'utilisateur (604) envoyées précédemment par d'autres utilisateurs et correspondant à l'attribut d'utilisateur identifié ; et
générer l'au moins un choix de réponse incorrect (606) sur la base, au moins en partie, de chacune des valeurs d'attribut d'utilisateur sélectionnées envoyées précédemment par d'autres utilisateurs.

11. Procédé selon la revendication 8, dans lequel, au cas où la ou les sélections ne correspondraient pas à chacune de l'au moins une valeur d'attribut d'utilisateur sélectionnée, la vérification sera déterminée comme n'étant pas réussie.

12. Procédé selon la revendication 8, où, au cas où la vérification serait déterminée comme étant réussie, le procédé comprend en outre l'étape consistant à autoriser la poursuite de la transaction associée à la demande de vérification sans demander en outre un mot de passe d'utilisateur.

13. Procédé selon la revendication 8, où, au cas où la vérification serait déterminée comme n'étant pas réussie, le procédé comprend en outre l'étape consistant à bloquer la transaction associée à la demande de vérification.

14. Produit de programme informatique permettant d'assurer une vérification, le produit de programme informatique étant intégré dans un support de stockage non temporaire lisible par ordinateur et comprenant des instructions informatiques pour :
recevoir une demande de vérification (202) associée à un utilisateur ;
récupérer une information de compte (204) associée à l'utilisateur, l'information de compte incluant une pluralité de valeurs d'attribut d'utilisateur envoyées précédemment par l'utilisateur ;
sélectionner au moins une valeur d'attribut d'utilisateur (206) parmi la pluralité de valeurs d'attribut d'utilisateur incluses dans l'information de compte ;
générer dynamiquement une question de vérification (208) et une pluralité de choix de réponse sur la base de l'au moins une valeur d'attribut d'utilisateur sélectionnée, la pluralité de choix de réponse incluant l'au moins une valeur d'attribut d'utilisateur sélectionnée, et la génération de la pluralité de choix de réponse comprend en outre les étapes consistant à :
générer au moins un choix de réponse incorrect, sur la base d'une valeur d'attribut d'utilisateur envoyée précédemment par un autre utilisateur, l'autre utilisateur étant différent de l'utilisateur ;
comparer un montant de paiement souhaité, associé à une transaction, à une valeur-seuil prédéfinie de montant de paiement, et au cas où le montant de paiement souhaité dépasserait la valeur-seuil de montant de paiement (404), la pluralité de choix de réponse inclura de multiples bonnes réponses (406) sur la base, au moins en partie, de l'au moins une valeur d'attribut d'utilisateur sélectionnée ;
présenter la question de vérification (210) et la pluralité de choix de réponse à l'utilisateur ;
recevoir une ou plusieurs sélections (212) associées à la pluralité de choix de réponse ; et
déterminer si la vérification est réussie (214) sur la base, au moins en partie, de la ou des sélections, et au cas où la pluralité de choix de réponse inclurait de multiples bonnes réponses, la vérification sera réussie si la ou les sélections reçues correspondent à une pluralité de sélections et si la pluralité de sélections correspond aux multiples bonnes réponses.
